# EUROPEAN PATENT SPECIFICATION

(11) **EP 1 983 387 B1**
(45) Date of publication and mention of the grant of the patent: **01.11.2017**
(21) Application number: 08003691.6
(22) Date of filing: 28.02.2008
(51) Int. Cl.: G03H 1/02, G03H 1/30

(54) **Holographic printing apparatus**
Holographische Druckvorrichtung
Appareil d'impression holographique

(30) Priority: 05.03.2007 JP 2007054386
(43) Date of publication of application: 22.10.2008
(73) Proprietor: FUJIFILM Corporation, Minato-ku Tokyo 106-8620 (JP)
(72) Inventor: Usami, Yoshihisa, Kanagawa 258-8577 (JP)
(74) Representative: Grünecker Patent- und Rechtsanwälte PartG mbB

(56) References cited:
- WO-A-2005/078533
- JP-A- 10 097 175
- US-A- 5 291 317
- US-A- 6 127 066

## Description

The present invention relates generally to a printing apparatus according to the preamble of independent claim 1. Such a printing apparatus as well as such a printing method can be taken from the prior art document WO 2005/078533 A1. In particular, said document teaches a hologram production device including holographic recording material deposition systems to deposit holographic recording material provided as an ink by means of nozzle means onto a transparent polymer substrate, wherein laser light beams are ejected on the respective ink spots on the substrate in order to create the respective hologram which is fixed by UV light or the like. For generating the laser beams an optical system is provided which comprises a pulsed laser and laser-light transmitting means constituted by a specific arrangement of lenses and mirrors. Said laser-light transmitting means comprises a laser beam splitter in order to split up the laser beam into a first beam and a second beam, wherein the first beam is transmitted at a first path to a first side of the printed holographic recording material and the second beam is transmitted at a second path to the opposing second side of said printed holographic material, so that said beams are simultaneously ejected to a common spot to create the respective hologram.

Inkjet printers, which have recently been in widespread use, are printing apparatuses that are generally configured to eject droplets of ink in a liquid or gel form onto a support such as a sheet (of paper, etc.) to form pixels on the support until the pixels are formed on an entire surface of the support, so that printing on the support is accomplished.

Multicolor printing using such an inkjet printer is performed with a plurality of ink tanks (for cyan, magenta, yellow, black, etc., for example) and inkjet nozzles used to jet fine droplets of ink of respective colors onto a support. To achieve improved color reproduction, the number of colors (i.e., the number of ink tanks and inkjet nozzles) may be increased, or several droplets of ink in different colors may be ejected onto the same spots.

In the conventional inkjet printers, representation of an object aglint in color cannot be achieved without applying special techniques; for example, an inkjet printing may be performed onto a hologram support as disclosed in JP 2004-42667 A, or a separately prepared laminate is provided on a printed support as disclosed in JP 2003-63198 A.

In the conventional inkjet printers as above, representation of something aglint on a support such as a sheet of paper, etc. cannot be achieved directly. In other words, this can be realized only by providing a special hologram support on which printing is to be performed or by laminating a separately prepared material, and thus the texture of the sheet at hand cannot be utilized as it is. For example, there are cases where it is desirable to print on a DVD-R medium directly, or to print a message on a preferred card without impairing the texture thereof. Furthermore, it is not possible to provide representation of something aglint only partially on the support.

It is an object of the present invention to provide a printing apparatus as indicated above, which is adapted to easily perform printing including representation of something aglint.

According to the apparatus aspect of the present invention, said objective is solved by a printing apparatus having the features of independent claim 1. Preferred embodiments are laid down in the dependent claims.

With the printing apparatus as described above, a holographic recording material may be ejected in dots from the recording material ejection nozzle onto a desired portion of the support (e.g., sheet of paper), and the interference fringes may be recorded by the hologram recording optical system in the portion on which the holographic recording material is ejected. The above process may be repeated while the recording material ejection nozzle and the hologram recording optical system are moved relative to the support, so that interference fringes may be recorded in the whole portion desired of the support. As a result, a hologram is recorded on the support as printed, and thus representation of something aglint may be achieved.

According to the embodiments only certain portions on the support as desired may be printed with the representation of something aglint. Furthermore, since such desirable representation can be realized on the prints only partially on the support, the representation of something aglint may be achieved without the loss of the texture of the support.

### BRIEF DESCRIPTION OF THE DRAWINGS

FIG. 1 is an external view of an inkjet printer according to a first embodiment which does not illustrate the entire combination of the features of the independent claim;
FIG. 2 is a block diagram of a printing mechanism unit;
FIG. 3 is a sectional view of the printing mechanism unit taken along line III-III of FIG. 1;
FIG. 4A is a sectional view of a head according to the first embodiment as viewed from the front side for illustrating its structure and printing operation;
FIG. 4B is a sectional view of a portion of a sheet onto which beams of laser light are emitted during printing operation of the head of FIG. 4A;
FIG. 4C is a sectional view of the portion of the sheet shown to explain how it is observed after the printing operation of the head of FIG. 4A;
FIG. 5 is an example of a printed matter on which an image has been printed by the inkjet printer according to one embodiment;
FIG. 6A is a sectional view of a head of an inkjet printer in operation according to a second embodiment which does not illustrate the entire combination of the features of the independent claim;
FIG. 6B is a schematic diagram showing interference fringes recorded on a sheet by a first hologram recording optical system of the head of FIG. 6A;
FIG. 6C is a schematic diagram showing interference fringes recorded on a sheet by a second hologram recording optical system of the head of FIG. 6A;
FIG. 7 is a sectional view of a head of an inkjet printer in operation according to a third embodiment which does not illustrate the entire combination of the features of the independent claim;
FIG. 8 is a sectional view of a head of an inkjet printer in operation according to a fourth embodiment which does not illustrate the entire combination of the features of the independent claim;
FIG. 9 is a sectional view of a head of an inkjet printer in operation according to a fifth embodiment which does not illustrate the entire combination of the features of the independent claim;
FIG. 10A is a sectional view of a head of an inkjet printer in operation according to a sixth embodiment which illustrates the entire combination of the features of the independent claim;
FIG. 10B is a sectional view of a portion of a sheet onto which beams of laser light are emitted during printing operation of the head of FIG. 10A;
FIG. 10C is a sectional view of the portion of the sheet shown to explain how it is observed after the printing operation of the head of FIG. 10A.

### DETAILED DESCRIPTION OF THE EXEMPLARY EMBODIMENTS

### [First Embodiment]

A description will be given of a holographic recording apparatus (printing apparatus) and recording method (printing method) according to a first embodiment which does not illustrate the entire combination of the features of the independent claim with reference to the drawings.

### GENERAL OUTLINE OF PRINTING APPARATUS

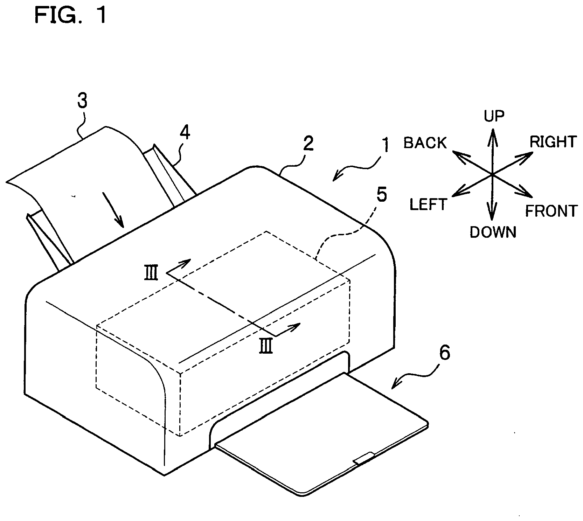

An inkjet printer 1 (Figure 1) as an example of a printing apparatus according to the present embodiment is a device for performing printing on a support of various kinds such as a sheet 3 etc., based upon printing data (head driving data) sent from a host computer.

The inkjet printer 1 includes a body 2, a sheet feed unit 4 disposed at the back side of the body 2, and a sheet output unit 6 disposed at the front side of the body 2. The body 2 includes a printing mechanism unit 5 which is configured to perform printing on a sheet 3 fed from the sheet feed unit 4, and the sheet 3, thus printed, is discharged to the sheet output unit 6.

### PRINTING MECHANISM UNIT

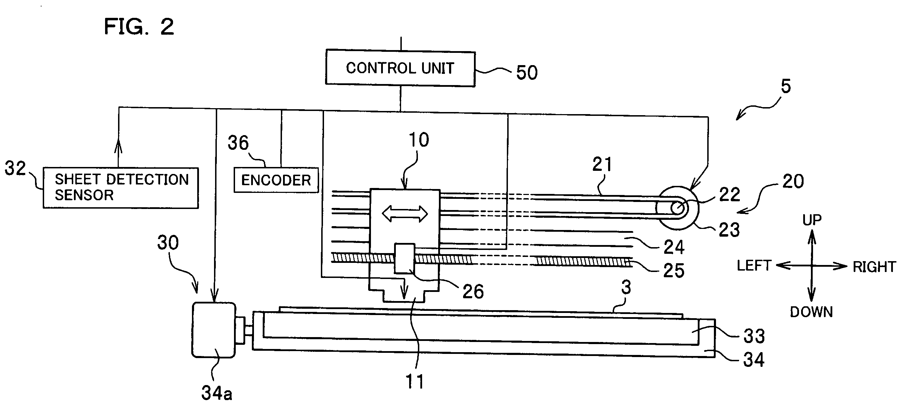

The printing mechanism unit 5 includes, as shown in FIG. 2, a carriage 10, a scanning drive unit 20, and a conveyor mechanism 30. The scanning drive unit 20 is configured to cause the carriage 10 to move relative to a sheet 3 while keeping a predetermined distance between the carriage 10 and the sheet 3, so that the carriage 10 moves parallel to a sheet 3. The conveyor mechanism 30 is configured to convey the sheet 3 in a direction perpendicular to the direction of movement of the carriage 10.

The carriage 10 includes a head 11 configured to eject a holographic recording material (hereinafter referred to as 'holographic ink') in a liquid or gel form. A cartridge installation part to which an ink cartridge for supplying the head 11 with holographic ink is to be installed is formed in the head 11.

The head 11 is a part configured to eject droplets of holographic ink supplied from the ink cartridge onto a sheet 3 to form dots on the sheet 3, thereby forming an image on the sheet 3 with the holographic ink, and to record interference fringes by means of laser light. A more detailed description of the head 11 will be given later.

The scanning drive unit 20 includes a timing belt 21 to be connected to the carriage 10, a pulley 22 engageable with the timing belt 21, a carriage motor 23 configured to rotate the pulley 22, a guide rail 24 configured to guide the movement of the carriage 10, a linear encoder code plate 25 configured to detect the position of the carriage 10, and a detector 26 configured to detect the linear encoder code plate 25. The scanning drive unit 20 drives the carriage motor 23, and rotates the timing belt 21 around the pulley 22. Thereby, the carriage 10, moves along the guide rail 24 relative to the sheet 3 laterally (in a direction perpendicular to the direction of conveyance of the sheet 3). The carriage motor 23 receives a control signal from a control unit 50 and is thus driven under control of the control unit 50.

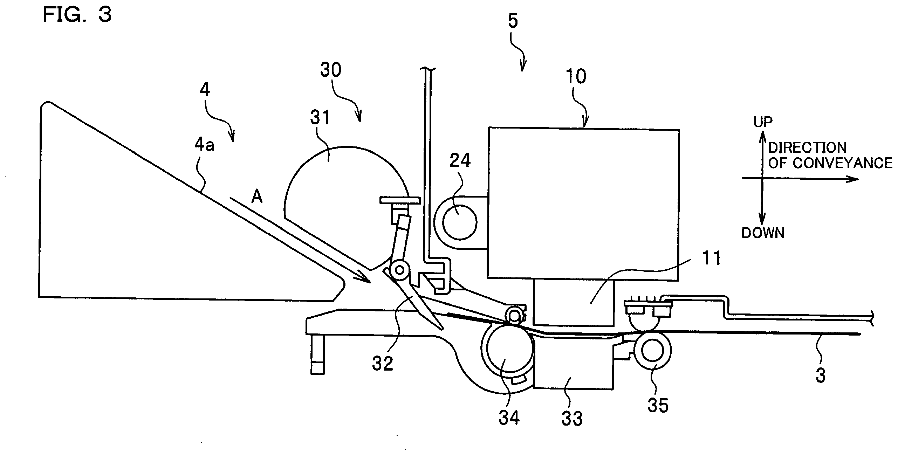

The conveyor mechanism 30 includes, as shown in FIG. 3, a sheet feed roller 31, a sheet detection sensor 32, a platen 33, a conveyor roller 34, and a sheet output roller 35.

The sheet feed roller 31 is shaped like a letter D in cross section, and configured to feed one sheet 3 after another toward the head 11. The sheet detection sensor 32 is a member swingably provided in a position along the sheet conveyance route downstream relative to the sheet feed roller 31, and configured to swing upon contact with the sheet when the sheet 3 passes along the route, which swinging motion is in turn detected by an optical sensor to thereby detect the passage of the sheet 3.

The platen 33 is disposed opposite to the head 11.

The conveyor roller 34 is disposed in a position upstream relative to the platen 33, and configured to be rotated by a conveyor motor 34a (see FIG. 2). The conveyor motor 34 thus rotates, to thereby feed a sheet 3 onto the platen 33. The amount of rotation of the conveyor roller 34 is detected by a rotary encoder 36 (see FIG. 2).

The sheet output roller 35 is disposed in a position downstream relative to the platen 33, and configured to be driven in synchronization with the conveyor motor 34a. The sheet output roller 35 thus rotates, to thereby convey a sheet 3 on which printing has been performed, in a sheet output direction.

The conveyor motor 34a receives a control signal from the control unit 50 and is thus driven under control of the control unit 50.

Sheets 3 to be printed are set in a sheet feed tray 4a of the sheet feed unit 4. Each sheet 3 set in the sheet feed tray 4a is conveyed along a route in a direction indicated by an arrow A by the sheet feed roller 31 shaped substantially like a letter D in cross section, subjected to printing by the head 11, and then outputted to the outside of the printing mechanism unit 5 by the sheet output roller 35.

Since the printing mechanism unit 5 includes the scanning drive unit 20 and the conveyor mechanism 30, the printing mechanism unit 5 is capable of forming interference fringes at desired positions within a predetermined area on each sheet 3 by holographic ink in dots and laser light. To be more specific, a sheet 3 is intermittently conveyed at a predetermined distance by the conveyor roller 34, and during the intermission of the conveyance, the carriage 10 is moved in a direction perpendicular to the direction of conveyance of the sheet 3 by the conveyor roller 34, while the head 11 ejects droplets of holographic ink onto the sheet 3. Emission of two beams of laser light onto the ejected droplets of holographic ink forms pixels made up of interference fringes at desired positions on the sheet 3.

### HEAD STRUCTURE

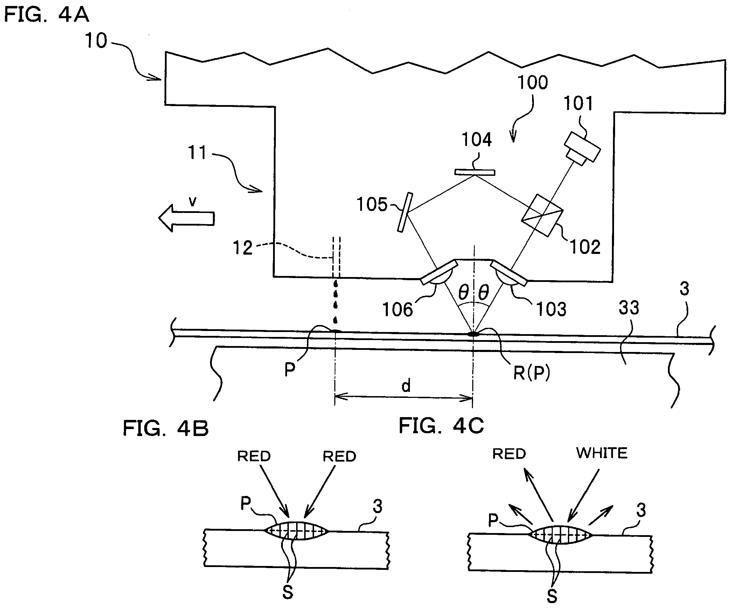

The head 11 is disposed opposite a sheet 3 on the platen 33, and includes as shown in FIG. 4 a nozzle 12 and a hologram recording optical system 100.

The nozzle 12 includes a piezoelectric element (not shown) like a known inkjet printer as a driver element for ejecting ink droplets. The piezoelectric element receives a pulse signal corresponding to pixels of an image to be printed from the control unit 50.

When a voltage is applied for a predetermined period of time between electrodes provided at both ends of the piezoelectric element, the piezoelectric element expands according to the period of time for which the voltage is applied, and a wall of a passage of ink is deformed. As a result, the capacity of the passage of ink is reduced according to the quantity of expansion of the piezoelectric element, and a certain amount of ink (hologram recording material) corresponding to the shrinkage (reduction of capacity) of the passage of ink is ejected in droplets from the nozzle 12.

The holographic ink is a material which exhibits a refractive index which may be changed by irradiation of laser light. In order to have a printed image which can be seen with light having a wavelength deviated from the wavelength of the laser light emitted during recording, any material having a great refractive index modulation (rate of change in refractive index effected by light irradiation) may preferably be adopted. In this respect, photopolymer may be one of desirable options for the holographic ink (hologram recording material).

The hologram recording optical system 100 is disposed in a head 11 at a location rearward of the nozzle 12 in the moving direction of the head 11. That is, in FIG. 4A, the head 11 is controlled to eject holographic ink from the nozzle 12 while moving from the right to the left, and thus the hologram recording optical system 100 is disposed at the right side.

The hologram recording optical system 100 includes a laser light source 101, a beam splitter 102, objective lenses 103, 106, and mirrors 104, 105.

The laser light source 101 may be configured to emit light of a wavelength of 700 nm or less, so that the recorded interference fringes reflect light in visible radiation. The wavelength of the light emitted from the laser light source 101 may be preferably 550 nm or less, more preferably 500 nm or less, and most preferably 450 nm or less. The lowest limit of the wavelength of the light emitted from the laser light source 101 may be 200 nm or greater, preferably 250 nm or greater, more preferably 300 nm or greater, still more preferably 350 nm or greater, and most preferably 400 nm or greater.

The laser light source 101 is disposed so as to emit a beam of laser light at an angle θ with respect to the direction of the normal to the sheet 3, and the beam splitter 102 and the objective lens 103 are disposed in the direction of travel of the laser light. The objective lens 103 is configured to gather and concentrate laser light in a recording position R on the sheet 3. On the other hand, the mirror 104 and the mirror 105 are disposed along the route of travel of laser light branched off by the beam splitter 102. On the optical path of the branched laser light of which the direction of travel has been changed by reflection in the mirrors 104, 105, the objective lens 106 is disposed to gather and concentrate light in the recording position R.

The beam splitter 102, and the mirrors 104, 105 are disposed so that beams of laser light passing through the objective lenses 103, 106 are gathered and concentrated into the same recording position R, and strike the sheet 3 in the recording position R at the angle θ with respect to the normal to the sheet 3, respectively.

The angle θ of incidence of the beams laser light striking the sheet 3 may be determined without limitation, but may preferably be configured so that two beams of laser light form an angle (denoted by 2θ in FIG. 4A) ranging from 15 degrees to 180 degrees. If this angle is smaller than 15 degrees, pitches of the interference fringes should become too small, and thus become unlikely to reflect in visible radiation. The angle between the beams of laser light may be preferably 30 degrees or greater, more preferably 60 degrees or greater, and most preferably 135 degrees or greater.

It is noted that the hologram recording optical system 100 may include, other than those described above, lenses or filters or the like which may be provided on an as-needed basis.

The laser light source 101 receives a pulse signal corresponding to data to be printed from the control unit 50, and emits light intermittently in accordance with the pulse signal. It is however to be understood that the laser light source 101 may emit light continuously if pixels to be printed are continuous, and intermittent emission of light would in any case be advantageous in that clear interference fringes can be recorded even under some vibrating conditions.

Pulse signals received from the control unit 50 by the laser light source 101 are delayed at a predetermined time interval with respect to the pulse signals received by the nozzle 12. The delay may be set at d/v, where printing is performed while the carriage 10 is moved at a speed v, and the distance between a spot (hereinafter referred to as "ink spot") P of holographic ink ejected by the nozzle 12 and recording position R of the laser light source 101 is d. That is, if a signal received by the laser light source 101 is delayed relative to the time when the same signal is received by the nozzle 12 by approximately d/v, a beam of laser light is adjusted to appropriately strike to the spot P of holographic ink ejected by the nozzle 12.

Operation of the inkjet printer 1 configured as described above will be discussed hereafter.

A sheet 3 placed on the sheet feed tray 4a is conveyed onto the platen 33 by the operation of the sheet feed roller 31 and the conveyor roller 34 driven under control of the control unit 50.

The control unit 50 drives the nozzle 12 and the hologram recording optical system 100 while driving the carriage motor 23 to move the carriage 10 in the direction of the width (transverse direction) of the sheet 3, so that the sheet 3 is printed.

Pulse signals corresponding to arrangement in the transverse direction of pixels of the image to be printed are transmitted from a host computer and provided to the nozzle 12 and the hologram recording optical system 100. As described above, the pulse signals received by the hologram recording optical system 100 are delayed relative to the pulse signals received by the nozzle 12 by a predetermined time interval.

When the nozzle 12 receives a pulse signal, the nozzle 12 ejects an appropriate amount of holographic ink to form an ink spot P on a sheet 3. When the carriage 10 is moved in the transverse direction and the ink spot P is matched up to the recording position R of the hologram recording optical system 100, a pulse signal is provided to the laser light source 101, and two beams of laser light are emitted to the ink spot P simultaneously as shown in FIG. 4B. Irradiation of the laser light causes interference fringes S to be recorded in the ink spot P as distribution of refractive indices.

The above operation is performed over an entire width of the printable area on the sheet 3, and thereafter the conveyor motor 34a is rotated by a predetermined amount to cause the sheet 3 to move in a sheet-feed direction (direction of conveyance), and the next line is printed in the same manner of operation as described above. This operation is performed over an entire length of the printable area on the sheet 3, to thereby print an image on the sheet 3.

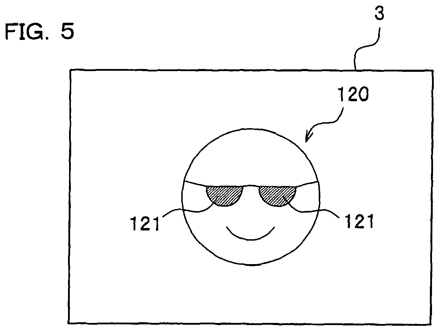

The printed image is formed, for example, like an image 120 illustrated in FIG. 5, in which sunglasses 121 are aglint, so that representation of the texture of mirror lenses of the sunglasses 121 may be achieved.

Next, described is how the printed portion is seen. If beams of red-color laser light were emitted simultaneously onto a sheet 3 as shown in FIG. 4B during printing operation, white-color light striking the sheet 3 at the same angle as the angle of incidence of one of the beams of laser light emitted during the printing operation is partly diffracted at the interference fringes S as shown in FIG. 4C; to be more specific, a component of the white-color light having a wavelength closer to the wavelength of a red color is diffracted, and reflected particularly more strongly in the direction in which the other of the beams of laser light was emitted during the printing operation. The other components of the white-color light having the other wavelengths and a red-color light striking the sheet 3 are diffused at the surface of the sheet (e.g., white paper) to spread out in a wide angular range of directions, and the interference fringes S render the reflection of red or other specific-color components of light particularly strong depending upon the angle of view. That is, the increased specular reflection factor of the light renders the observed image aglint.

As described above, the inkjet printer 1 according to the present embodiment is configured to form an ink spot P with holographic ink only in a desired area of the sheet 3 and to form interference fringes S in the ink spot P by beams of laser light; therefore, a desired effect in representation of something aglint may be achieved only in a desired area on the sheet 3.

### [Second Embodiment]

The next discussion is directed to a second embodiment which does not illustrate the entire combination of the features of the independent claim. The following description of the second embodiment focuses only on features of an inkjet printer different from those of the inkjet printer 1 according to the first embodiment. The same elements as in the first embodiment are designated by the same reference characters, and a duplicate description will be omitted.

The inkjet printer according to the second embodiment relates to a modification of the inkjet printer 1 according to the first embodiment, specifically of the head 11 thereof.

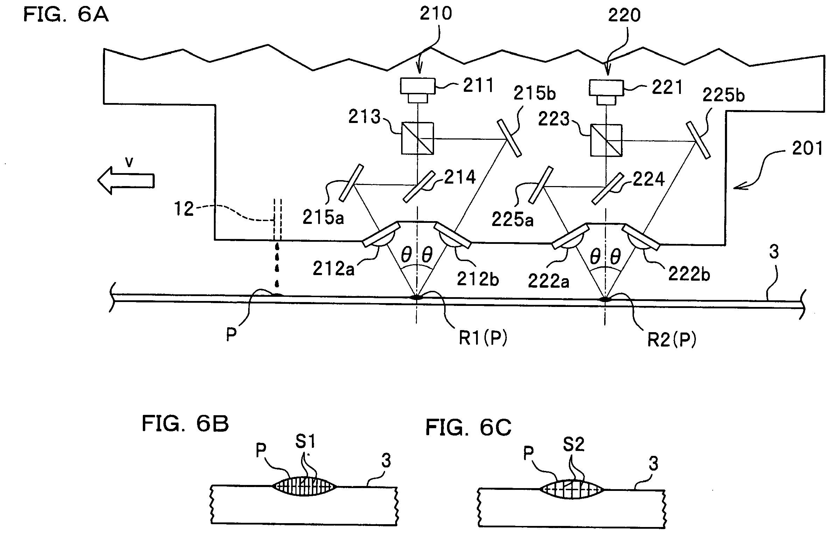

As shown in FIG. 6A, a head 201 includes a nozzle 12, a first hologram recording optical system 210 and a second hologram recording optical system 220. The first hologram recording optical system 210 and the second hologram recording optical system 220 are arranged in this sequence in a position rearward of the nozzle 12 in the moving direction of the head 201.

The first hologram recording optical system 210 includes a laser light source 211, objective lenses 212a, 212b, a half mirror 213, and mirrors 214, 215a, 215b. The half mirror 213 is disposed in the direction of travel of laser light emitted by the laser light source 211, and the laser light is branched at the half mirror 213 into light traveling straightforward (straightforward light) and light whose direction of travel is changed at 90 degrees (reflected light). On the optical path of the straightforward light, the mirror 214 and the mirror 215a are disposed to gather and concentrate the laser light through the objective lens 212a in a recording position R1. On the optical path of the reflected light, similarly, the mirror 215b is disposed to gather and concentrate the laser light through the objective lens 212b in the recording position R1.

The second hologram recording optical system 220 has a configuration similar to the first hologram recording optical system 210, and includes a laser light source 221, a half mirror 223, mirrors 224, 225a, 225b, and objective lenses 222a, 222b. The laser light source 221 is configured to produce laser light having a wavelength longer than that of the laser light which the laser light source 211 of the first hologram recording optical system 210 is configured to produce. The objective lenses 222a, 222b are disposed to gather and concentrate beams of laser light in a recording position R2 on the sheet 3.

For example, the laser light source 211 of the first hologram recording optical system 210 may be a blue-color laser, and the laser light source 221 of the second hologram recording optical system 220 may be a green-color laser.

The inkjet printer according to the present embodiment is, as described above, a printing apparatus which includes two hologram recording optical systems 210, 220 and is thus configured to produce two beams of laser light different from each other in color (wavelength), so that color images with two primary colors used therein may be produced and printed on a sheet 3.

The nozzle 12 receives a pulse signal corresponding to the positions of pixels of an image to be printed, from the control unit 50, while the laser light source 211 and the laser light source 221 receive a pulse signal corresponding to the positions of pixels of the image to be printed, from the control unit 50. To be more specific, when the recording position R1 comes to a position in which a blue-color pixel is to be formed, a pulse signal is inputted to the laser light source 211 by the control unit 50; on the other hand, when the recording position R2 comes to a position in which a green-color pixel is to be formed, a pulse signal is inputted to the laser light source 221 by the control unit 50. As in the first embodiment, in order to record interference fringes at desired ink spots P by the first hologram recording optical system 210 and the second hologram recording optical system 220, timing of input of the pulse signals to the first and second hologram recording optical systems 210, 220 with respect to the input of pulse signals to the nozzle 12 are adjusted in accordance with the distances between the ink spot P formed by the nozzle 12 and the recording position R1, and between the ink spot P and the recording position R2. In discussing other exemplary embodiments below, any similar description of such adjustments of timing will be omitted.

The inkjet printer according to the second embodiment is, as described above, configured to form an ink spot P on a sheet 3 by the nozzle 12 and to form interference fringes in the ink spot P by beams of blue-color laser light and green-color laser light emitted from the first hologram recording optical system 210 and the second hologram recording optical system 220, respectively, to form a color image with two primary colors utilized.

For example, the first hologram recording optical system 210 records, as shown in FIG. 6B interference fringes S1 in narrower pitches in the ink spot P, while the second hologram recording optical system 220 records, as shown in FIG. 6C interference fringes S2 in wider pitches therein.

The interference fringes S1, S2 may be recorded in the same ink spot P in an overlapping manner; alternatively, ink spots P may be formed for the interference fringes S1 and for the interference fringes S2, respectively, so that the interference fringes S1 and the interference fringes S2 are formed in different positions. It is to be understood that this applies to the other embodiments that will be described below.

Although this embodiment illustrates an example in which a color image is formed with two primary colors utilized therein by making use of two hologram recording optical systems, the present teaching is not limited to this specific embodiment. It is to be understood that more than two hologram recording optical systems may be used to form a more colorful image.

### [Third Embodiment]

The next discussion is directed to a third embodiment which does not illustrate the entire combination of the features of the independent claim. The following description of the third embodiment as well focuses only on features of an inkjet printer different from those of the inkjet printer according to the second embodiment. The same elements as in the second embodiment are designated by the same reference characters, and a duplicate description will be omitted.

The inkjet printer according to the third embodiment is a printing apparatus, as in the second embodiment, configured to form a color image with two primary colors utilized therein, but different from the second embodiment in that the wavelength of laser light produced in the laser light source is no more than one kind.

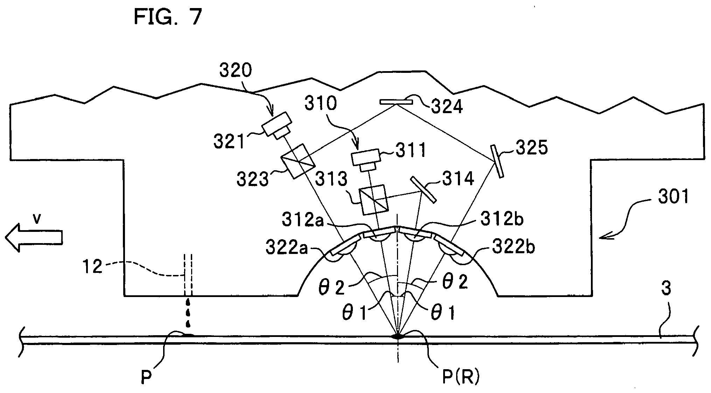

As shown in FIG. 7, a head 301 includes a nozzle 12, a first hologram recording optical system 310 and a second hologram recording optical system 320. The first and second hologram recording optical systems 310, 320 are arranged in a position rearward of the nozzle 12 in the moving direction of the head 301 so that beams of laser light emitted from the first and second hologram recording optical systems 310, 320 are gathered and concentrated in the same recording position R.

The first hologram recording optical system 310 includes a laser light source 311, objective lenses 312a, 312b, a half mirror 313, and a mirror 314. The half mirror 313 and the objective lens 312a are disposed in the direction of travel of laser light emitted by the laser light source 311. Laser light whose direction of travel is changed at 90 degrees at the half mirror 313 is reflected off the mirror 314, and the object lens 312b is disposed on the optical path of the reflected light. Laser light traveling straightforward through the half mirror 313 and laser light branching off at 90 degrees at the half mirror 313 are both configured to strike a sheet 3 at a small angle θ1 of incidence (normal to the sheet 3), whereas the objective lenses 312a, 312b are both arranged to gather and concentrate the beams of laser light in the same recording position R on the sheet 3. The laser light source 311 in this embodiment is configured to produce, for example, laser light having a relatively short wavelength, such as blue-color laser, selected among wavelengths somewhere in the visible-light portion of the spectrum.

The second hologram recording optical system 320 has a configuration similar to the hologram recording optical system 100 according to the first embodiment, and includes a laser light source 321, a beam splitter 323, objective lenses 322a, 322b, and mirrors 324, 325. The laser light source 321 is a laser light source having the same wavelength as the laser light source 311 of the first hologram recording optical system 310. The laser light source 321 is disposed so as to emit a beam of laser light at an angle θ2 greater than the angle θ1 with respect to the direction of the normal to the sheet 3, and the beam splitter 323 and the objective lens 322a are disposed in the direction of emission of the laser light from the laser light source 321. The mirror 324, the mirror 325 and the objective lens 322b are disposed along the route of travel of laser light branched off by the beam splitter 323. The objective lenses 322a, 322b are disposed so that the both beams of laser light branched and transmitted in the beam splitter 323 are gathered and concentrated in the recording position R.

The first hologram recording optical system 310 and the second hologram recording optical system 320 are both under control of the control unit 50, though they are controlled to emit light not simultaneously but separately with a time interval provided between the times of emission by the first and second hologram recording optical systems 310, 320.

The inkjet printer according to the third embodiment is, as described above, configured to form an ink spot P on a sheet 3 by the nozzle 12 and to form interference fringes in the ink spot P by beams of blue-color laser light emitted from the first hologram recording optical system 310 and the second hologram recording optical system 320. In this operation, the first hologram recording optical system 310 is configured to produce two beams of laser light each striking a sheet 3 at an angle θ1 with respect to the normal to the sheet 3, i.e., such that the two beams of laser light form an angle θ1 x 2, for example, and thus may record a wide pitch of interference fringes as shown in FIG. 6C; on the other hand, the second hologram recording optical system 320 is configured to produce two beams of laser light forming a wider angle θ2 with respect to the normal to the sheet 3, and thus may record a narrow pitch of interference fringes as shown in FIG. 6B.

In this way, the pitch of interference fringes may be changed by changing an angle of two beams of laser light that are emitted simultaneously even if two beams laser light having the same wavelength are used. That is, an image in which light reflected off is seen with multiple colors may be formed.

For example, the first hologram recording optical system 310 may be configured to form pixels which reflect in red color, and the second hologram recording optical system 320 may be configured to form pixels which reflect in green color. It is to be understood that a third hologram recording optical system configured to cause beams of laser light to strike a recording position R on a sheet 3 with a wider angle of incidence, so as to form pixels which reflect in blue color to thereby form a more colorful image.

### [Fourth Embodiment]

The next discussion is directed to a fourth embodiment which does not illustrate the entire combination of the features of the independent claim. The following description of the fourth embodiment focuses only on features of an inkjet printer different from those of the inkjet printer 1 according to the first embodiment. The same elements as in the first embodiment are designated by the same reference characters, and a duplicate description will be omitted.

The inkjet printer according to the fourth embodiment relates to a modification of the inkjet printer 1 according to the first embodiment, specifically of the head 11 thereof.

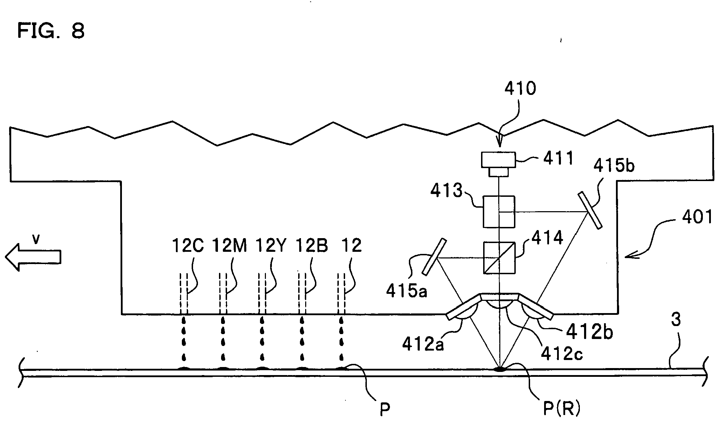

As shown in FIG. 8, a head 401 includes a nozzle 12C for cyan ink, a nozzle 12M for magenta ink, a nozzle 12Y for yellow ink, and a nozzle 12B for black ink, as provided in an inkjet printer known in the art, in addition to a nozzle 12 for holographic ink. In the present embodiment, these nozzles 12C, 12M, 12Y and 12B are arranged in positions forward of the nozzle 12 in the moving direction of the head 401. The nozzles 12C, 12M, 12Y and 12B are driven under control of the control unit 50 exercised in accordance with the printing data of a color image provided from a host computer, in such a manner as in the known inkjet printer.

The head 401 further includes a hologram recording optical system 410 that is disposed in a position rearward of the nozzle 12 in the moving direction of the head 401. The hologram recording optical system 410 includes a laser light source 411, objective lenses 412a, 412b, half mirrors 413, 414, and mirrors 415a, 415b. The half mirrors 413, 414 are disposed in the direction of travel of laser light emitted by the laser light source 411, and the laser light is branched twice at the half mirrors 413, 414 into light traveling straightforward and light whose direction of travel is changed at 90 degrees to the right and to the left, respectively. On the optical path of the straightforward light, the objective lens 412c is disposed. On the optical path of the light reflected to the right by the half mirror 413, the mirror 415b and the objective lens 412b are disposed. On the optical path of the light reflected to the left by the half mirror 414, the mirror 415a and the objective lens 412a are disposed. Beams of laser light passing through the objective lenses 412a, 412b, 412c are gathered and concentrated in the recording position R.

The nozzle 12 and the hologram recording optical system 410 are driven under control of the control unit 50 as in the first embodiment, and configured to eject holographic ink from the nozzle 12 and to record interference fringes in the portion (ink spot P) where holographic ink has been ejected by the hologram recording optical system 410, in accordance with instructions provided from the host computer.

With the inkjet printer having the head 401 configured as described above, holographic ink may be ejected to record interference fringes over a sheet on which multicolor inkjet printing has been performed by a conventional technique, so that representation of something aglint may be achieved partially as shown in FIG. 5 in addition to the multicolor printing.

Although the present embodiment illustrates an example in which representation of something aglint is overlaid additionally over a sheet on which multicolor inkjet printing has been performed, such representation of something aglint may be achieved over a sheet printed in black and white by an inkjet printer. Furthermore, although three beams of laser light are simultaneously emitted to strike the recording position R to achieve representation of something aglint in the present embodiment, four beams of laser light may be simultaneously emitted, instead.

### [Fifth Embodiment]

The next discussion is directed to a fifth embodiment which does not illustrate the entire combination of the features of the independent claim. The following description of the fifth embodiment focuses only on features of an inkjet printer different from those of the inkjet printer 1 according to the first embodiment. The same elements as in the first embodiment are designated by the same reference characters, and a duplicate description will be omitted.

The inkjet printer according to the fifth embodiment relates to a modification of the inkjet printer 1 according to the first embodiment, specifically of the head 11 thereof.

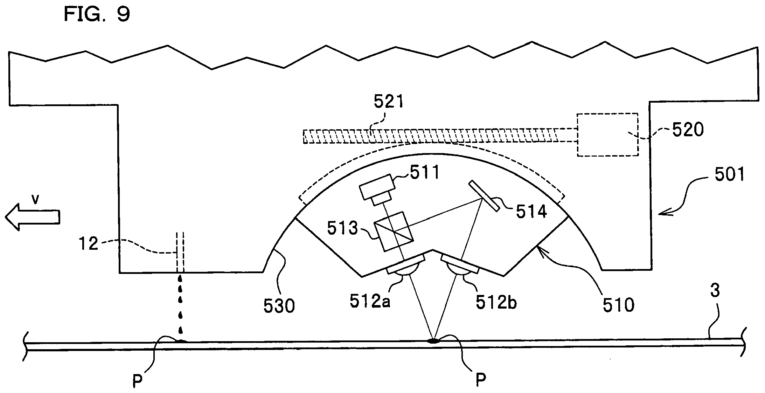

As shown in FIG. 9, a head 501 includes a nozzle 12, and a hologram recording optical system 510 disposed in a position rearward of the nozzle 12 in the moving direction of the head 501. The hologram recording optical system 510 includes, like the first hologram recording optical system 310 of the third embodiment, a laser light source 511, a half mirror 513, a mirror 514, and objective lenses 512a, 512b, which are arranged so that beams of laser light emitted by the laser light source 511 are gathered and concentrated in the recording position R.

The hologram recording optical system 510 is provided in a block separate from the main body of the head 501. The hologram recording optical system 510 has a mechanism similar to the goniometric stage, and has a semicylindrical sliding surface 530 with which the main body of the head 501 is engaged in a manner that permits the hologram recording optical system 510 to slide along the sliding surface 530 relative to the main body of the head 501. As a motor 520 is driven, a worm (threaded shank) 521 is rotated, and as the worm 521 rotates, the hologram recording optical system 510 as a whole turns along the sliding surface 530. The center of curvature of the sliding surface 530 coincides with the recording position R (P). Accordingly, the orientation (angular position) of the hologram recording optical system 510 can be changed by driving the motor 520 so that the orientation of interference fringes can be changed without changing configuration of optical elements (e.g., lens, etc.) in the optical system 510.

With the inkjet printer having the head 501 configured as described above, the control unit 50 may cause the motor 520 to rotate, to change orientation of the hologram recording optical system 510, so that beams of laser light may be emitted to form interference fringes from two or more different directions.

Consequently, it is possible to print on one and the same sheet 3 a hologram image printed from the left-side direction and a hologram image printed from the right-side direction in an overlapping manner, so that one can see different images on the sheet 3; i.e., one image when viewed obliquely from the right side and another image when viewed obliquely from the left side.

Furthermore, it is also possible to print different pictures on the sheet 3 which may be seen selectively according to the direction in which one views the sheet 3, while achieving representation of something aglint only in a desired portion on the sheet 3 without impairing the original quality or texture of the sheet 3. Moreover, if two beams of laser light are both emitted to strike the sheet 3 obliquely from the right-side direction of FIG. 9 to record interference fringes so that light is allowed to reflect only in the oblique direction relative to the sheet 3, i.e., one can see an image only from the oblique direction, then copyguarded information can be printed such that the information cannot be duplicated it its original state.

### [Sixth Embodiment]

The next discussion is directed to a sixth embodiment which illustrates the entire combination of the features of the independent claim. The following description of the sixth embodiment focuses only on features of an inkjet printer different from those of the inkjet printer 1 according to the first embodiment. The same elements as in the first embodiment are designated by the same reference characters, and a duplicate description will be omitted.

The inkjet printer according to the sixth embodiment relates to a modification of the inkjet printer 1 according to the first embodiment, specifically of the head 11 thereof.

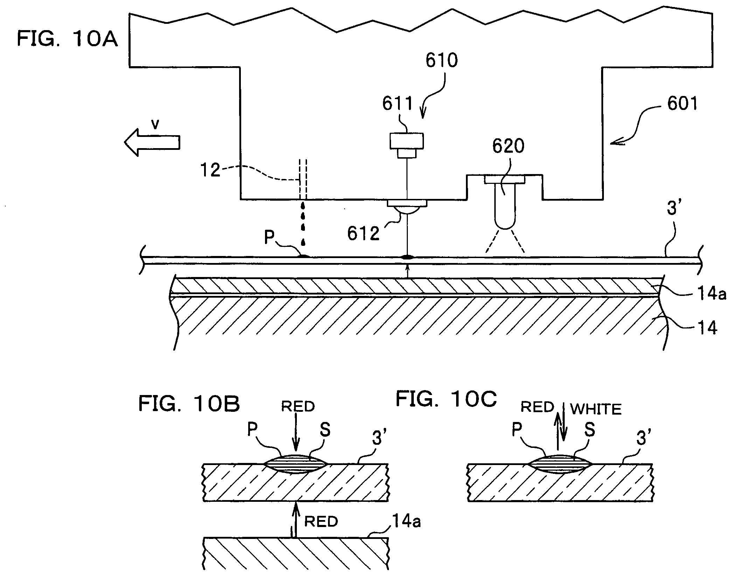

As shown in FIG. 10A, a head 601 of the inkjet printer according to the sixth embodiment includes a nozzle 12, a hologram recording optical system 610 and a light-emitting diode or LED 620. The hologram recording optical system 610 and the LED 620 are disposed in a position rearward of the nozzle 12 in the moving direction of the head 601. The LED 620 in this embodiment serves as a fixing device to fix a recorded hologram in the holographic ink. The inkjet printer illustrated in this embodiment is a printing apparatus configured to perform printing on a transparent sheet 3', such as an OHP sheet, with representation of something aglint achieved therein.

A mirror 14a is disposed on the top of a platen 14 over which a sheet 3' is placed; that is, the mirror 14a is disposed between the platen 14 and the sheet 3'.

The hologram recording optical system 610 includes a laser light source 611 and an objective lens 612 which is disposed in the direction of travel of beams of laser light emitted by the laser light source 611. The laser light source 611 is disposed to emit beams of laser light in a direction normal to the sheet 3', and the objective lens 612 is arranged to cause the beams of laser light to be gathered and concentrated to strike the sheet 3' perpendicularly.

The nozzle 12 and the hologram recording optical system 610 are, as in the first embodiment, under control of the control unit 50. To be more specific, the control unit 50 provides pulse signals to the nozzle 12 and thereby causes the nozzle 12 to eject holographic ink in accordance with an instruction of a host computer, and provides pulse signals to the laser light source 611 with a specific timing such that the laser light may be emitted onto an ink spot P formed with the holographic ink ejected from the nozzle 12.

The LED 620 is a light source to produce light for fixing a component of holographic ink which is not completely reacted or stabilized yet by irradiation of laser light, in the ink spot P so that the component will not be changed by exposure to light at a later time. For example, in cases where the holographic ink of the type which has a refractive index modulation obtained by polymerization of a monomer initiated by irradiation of laser light, most of the unreacted monomers are changed into polymers, to thereby fix the interference fringes.

The inkjet printer configured as described above, in operation, the nozzle 12 ejects holographic ink onto a transparent sheet 3', such as an OHP sheet, and the hologram recording optical system 610 emits beams of laser light onto an ink spot P of the holographic ink ejected by the nozzle 12.

In this operation, as shown in FIG. 10B, for example, beams of red-color laser light (a first subset of beams of laser light) enter the sheet 3' from a front side (first side; topside in the drawing) with an ink spot P formed thereon, pass through the sheet 3', and are reflected off the mirror 14a, while thus-reflected beams (a second subset of the beams of laser light) strike the ink spot P from a back side (second side; underside in the drawing) of the sheet 3'. Accordingly, beams of laser light of the same wavelength are directed to strike the ink spot P from the front side and from the back side of the sheet 3', whereby interference fringes S are recorded.

Thereafter, the unreacted component of the holographic ink in the ink spot P is fixed by the irradiation from the LED 620.

When the interference fringes S are observed from the front side of the sheet 3' illuminated with white-color light as shown in FIG. 10C, the white-color light is reflected with a red-color component intensified in particular so that representation of something aglint in red color is achieved. To be more specific, when light strikes the sheet 3' at the same angle (e.g., from the front side) as that at which the first subset of the beams of laser light was emitted to strike the sheet 3' during hologram recording operation, the light is reflected off the sheet 3' strongly in particular in the direction of emission of the second subset of the beams of laser light (e.g., from the back side to the front side). The reflected light other than the red-color light derived from the white light as illuminated is reflected strongly at angles other than the angle at which the red-color light is reflected.

As described above, with the inkjet printer according to the present embodiment, representation of something aglint may be achieved with a single laser light source.

Although the present embodiment is described by a specific example in which light of LED is used to fix holographic ink, the holographic ink may be fixed in other ways conformable to the characteristics of the holographic ink used, for example, by heat, pressure, electric field, magnetic field, or the like.

## Claims

1. A printing apparatus comprising:
a head (601) including a recording material ejection nozzle (12) configured to eject a holographic recording material in dots onto a transparent sheet (3') as a support;
a hologram recording optical system (610) configured to emit a beam of laser light onto the holographic recording material ejected on the transparent sheet (3') by the recording material ejection nozzle (12) to record interference fringes therein;
a mirror (14a), and
a moving means (20,30) configured to move the transparent sheet (3') relative to the recording material ejection nozzle (12) and the hologram recording optical system (610),
wherein
the beam of laser light enters the transparent sheet (3') from a first side,
and laser light reflected off the mirror (14a) enters the transparent sheet (3') from a
second side, **characterized in that**
the head (601) includes the hologram recording optical system (610),
the moving means comprises a scanning drive unit (20) configured to move the recording material ejection nozzle (12) and the hologram recording optical system (610) relative to the transparent sheet (3'), and conveyor means (30) configured to move the transparent sheet (3') relative to the recording material ejection nozzle (12) and the hologram recording optical system (610), wherein the scanning movement is perpendicular to the conveying movement,
the mirror (14a) is disposed opposite the head (601) with respect to the transparent sheet (3'), wherein the beam of laser light enters the transparent sheet (3') from the first side, passes through the transparent sheet (3'), and is reflected off the mirror (14a), while the thus-reflected beam enters the second side of the transparent sheet (3') to, in use, record interference fringes between the counter-propagating beams in the holographic recording material

2. A printing apparatus according to claim 1, **characterized in that** the hologram recording optical system (610) includes a laser light source (611) and an objective lens (612) which is disposed in a direction of travel of the beam of laser light emitted by the laser light source (611), the laser light source (611) is disposed to emit the beam of laser light in a direction normal to the transparent sheet (3'), and the objective lens (612) is arranged to cause the beam of laser light to be gathered and concentrated to strike the transparent sheet (3') perpendicularly.

3. A printing apparatus according to claim 1 or 2, **characterized by** a fixing device (620) provided to fix a recorded hologram in the holographic recording material.

4. A printing apparatus according to claim 3, **characterized in that** the hologram recording optical system (610) and the fixing device (620) are disposed in a position rearward of the nozzle (12) in a moving direction of the head (601).

## Patentansprüche

1. Druckvorrichtung, mit:
einem Kopf (601) mit einer Auswurfdüse für Aufzeichnungsmaterial (12), die ausgebildet ist, ein holographisches Aufzeichnungsmaterial in Punkten auf eine als Träger fungierende transparente Schicht (3')auszuwerfen;
einem optischen Hologramm-Aufzeichnungssystem (610), das ausgebildet ist, einen Strahl aus Laserlicht auf das holographische Aufzeichnungsmaterial einzustrahlen, das auf die transparente Schicht (3') durch die Auswurfdüse für Aufzeichnungsmaterial (12) ausgeworfen ist, um Interferenzmuster darin aufzuzeichnen;
einem Spiegel (14a), und
einer Bewegungseinrichtung (20, 30), die ausgebildet ist, die transparente Schicht (3') relativ zu der Auswurfdüse für Aufzeichnungsmaterial (12) und das optische Hologramm-Aufzeichnungssystem (610) zu bewegen, wobei
der Strahl aus Laserlicht von einer ersten Seite aus in die transparente Schicht (3') eintritt, und das von dem Spiegel (14a) reflektierte Laserlicht von einer zweiten Seite aus in die transparente Schicht (3') eintritt,
**dadurch gekennzeichnet, dass**
der Kopf (601) das optische Hologramm-Aufzeichnungssystem (610) enthält,
die Bewegungseinrichtung eine Abtastantriebseinheit (20) aufweist, die ausgebildet ist, die Auswurfdüse für Aufzeichnungsmaterial (12) und das optische Hologramm-Aufzeichnungssystem (610) relativ zu der transparenten Schicht (3') zu bewegen, und eine Transporteinrichtung (30) aufweist, die ausgebildet ist, die transparente Schicht (3') relativ zu der Auswurfdüse für Aufzeichnungsmaterial (12) und dem optischen Hologramm-Aufzeichnungssystem (610) zu bewegen, wobei die Abtastbewegung senkrecht zu der Transportbewegung verläuft, der Spiegel (14a) gegenüber zu dem Kopf (601) in Bezug auf die transparente Schicht (3') angeordnet ist, wobei der Strahl aus Laserlicht von der ersten Seite aus in die transparente Schicht (3') eintritt, die transparente Schicht (3') durchläuft und von dem Spiegel (14a) reflektiert wird, während der auf diese Weise reflektierte Strahl in die zweite Seite der transparenten Schicht (3') eintritt, um während des Betriebs Interferenzmuster zwischen den sich gegenläufig ausbreitenden Strahlen in dem holographischen Aufzeichnungsmaterial aufzuzeichnen.

2. Druckvorrichtung nach Anspruch 1, **dadurch gekennzeichnet, dass** das optische Hologramm-Aufzeichnungssystem (610) eine Laser-Lichtquelle (611) und eine Objektivlinse (612) aufweist, die in einer Richtung der Ausbreitung des Strahls aus Laserlicht, der von der Laser-Lichtquelle (611) ausgesendet wird, angeordnet ist, wobei die Laser-Lichtquelle (611) so angeordnet ist, dass sie den Strahl aus Laserlicht in eine Richtung senkrecht zu der transparenten Schicht (3') aussendet, und wobei die Objektivlinse (612) so angeordnet ist, dass sie bewirkt, dass der Strahl aus Laserlicht gesammelt und konzentriert wird, um senkrecht auf die transparente Schicht (3') zu treffen.

3. Druckvorrichtung nach Anspruch 1 oder 2, **gekennzeichnet durch** eine Fixiereinrichtung (620), die vorgesehen ist, um ein aufgezeichnetes Hologramm in dem holographischen Aufzeichnungsmaterial zu fixieren.

4. Druckvorrichtung nach Anspruch 3, **dadurch gekennzeichnet, dass** das optische Hologramm-Aufzeichnungssystem (610) und die Fixiereinrichtung (620) an einer Position hinter der Düse (12) in der Bewegungsrichtung des Kopfes (601) angeordnet sind.

## Revendications

1. Appareil d'impression comprenant:
une tête (601) comprenant une buse d'éjection de matériau d'enregistrement (12) configurée pour éjecter un matériau d'enregistrement holographique en points sur une feuille transparente (3') en tant que support;
un système optique d'enregistrement d'hologramme (610) configuré pour émettre un faisceau de lumière laser sur le matériau d'enregistrement holographique éjecté sur la feuille transparente (3') par la buse d'éjection de matériau d'enregistrement (12) pour enregistrer des franges d'interférence dans celui-ci;
un miroir (14a), et
un moyen de déplacement (20, 30) configuré pour déplacer la feuille transparente (3') par rapport à la buse d'éjection de matériau d'enregistrement (12) et au système optique d'enregistrement d'hologramme (610), dans lequel
le faisceau de lumière laser pénètre la feuille transparente (3') d'un premier côté,
et la lumière laser réfléchie par le miroir pénètre la feuille transparente (3') d'un second côté, **caractérisé en ce que**
la tête (601) comprend le système optique d'enregistrement d'hologramme (610),
le moyen de déplacement comprend une unité de commande de balayage (20) configurée pour déplacer la buse d'éjection de matériau d'enregistrement (12) et le système optique d'enregistrement d'hologramme (610) par rapport à la feuille transparente (3'), et des moyens de transport (30) configurés pour déplacer la feuille transparente (3') par rapport à la buse d'éjection de matériau d'enregistrement (12) et au système optique d'enregistrement d' hologramme (610), dans lequel le mouvement de balayage est perpendiculaire au mouvement de transport,
le miroir (14a) est disposé en regard de la tête (601) par rapport à la feuille transparente (3'), dans lequel le faisceau de lumière laser pénètre la feuille transparente (3') du premier côté, traverse la feuille transparente (3'), et est réfléchie sur le miroir (14a), tandis que le faisceau ainsi réfléchi pénètre le second côté de la feuille transparente (3') pour, en service, enregistrer des franges d'interférence entre les faisceaux de contre-propagation dans le matériau d'enregistrement holographique.

2. Appareil d'impression selon la revendication 1, **caractérisé en ce que** le système optique d'enregistrement d'hologramme (610) comprend une source de lumière laser (611) et une lentille d'objectif (612) qui est disposée dans une direction de déplacement du faisceau de lumière laser émise par la source de lumière laser (611), la source de lumière laser (611) est disposée pour émettre le faisceau de lumière laser dans une direction perpendiculaire à la feuille transparente (3') et la lentille d'objectif (612) est agencée pour amener le faisceau de lumière laser à recevoir et concentrer pour impacter la feuille transparente (3') de manière perpendiculaire.

3. Appareil d'impression selon la revendication 1 ou la revendication 2, **caractérisé par** un dispositif de fixation (620) prévu pour fixer un hologramme enregistré dans le matériel d'enregistrement holographique.

4. Appareil d'impression selon la revendication 3, **caractérisé en ce que** le système optique d'enregistrement d'hologramme (610) et le dispositif de fixation (620) sont disposés derrière la buse (12) dans une direction de déplacement de la tête (601).
